# EUROPEAN PATENT SPECIFICATION

(11) **EP 2 234 503 B1**
(45) Date of publication and mention of the grant of the patent: **24.08.2011**
(21) Application number: 08859407.2
(22) Date of filing: 12.12.2008
(51) Int. Cl.: A23F 3/16, A23F 3/18, A23L 1/30

(54) **FOOD PRODUCT WITH STABILZED NON-PROTEIN AMINO ACIDS**
LEBENSMITTELPRODUKT MIT STABILISIERTEN PROTEINFREIEN AMINOSÄUREN
PRODUIT ALIMENTAIRE CONTENANT DES ACIDES AMINÉS STABILISÉS ISSUS D'ALIMENTS NON PROTÉINÉS

(30) Priority: 12.12.2007 US 1721
(43) Date of publication of application: 06.10.2010
(73) Proprietor: Unilever PLC, London EC4Y 0DY (GB); Unilever N.V., 3013 AL Rotterdam (NL)
(72) Inventor: ZHANG, Shi-Qiu, Englewood Cliffs, New Jersey 07632 (US); ASTILL, Conrad, Rushden Northamptonshire NN10 6AS (GB); O'COINCEANAINN, Mairtin, Seosamh, Gaillimh (IE)
(74) Representative: Keenan, Robert Daniel
(86) International application number: PCT/EP2008/010838
(87) International publication number: WO 2009/074352

(56) References cited:
- EP-A- 1 810 575
- WO-A-95/18540
- US-A- 5 879 733
- US-B1- 6 462 051

## Description

### FIELD OF THE INVENTION

The present invention is directed to a food product comprising a stabilized non-protein amino acid. More particularly, the present invention is directed to a food product, like a beverage composition, whereby the food product has stabilized non-protein amino acid. The non-protein amino acid is often plant derived, such as theanine, and the amino acid is unexpectedly stabilized by antioxidants present within the food product.

### BACKGROUND OF THE INVENTON

Many different food products have been prepared in order to attract the attention of consumers. In fact, the modern consumer is particularly interested in nutritious foods which form part of a healthy life style. Examples of such foods include protein bars, foods with limited trans fatty acids, foods with low carbohydrate levels as well as foods that are rich in vitamins yet low in salt.

Beverages can fit well within the healthy concept attitude since they too may be formulated with healthy additives. Also, tea, which has natural flavonoids, catechins and amino acids, remains a popular beverage enjoyed by many consumers.

An amino acid, like theanine, is often desired since theanine has been found to have numerous beneficial effects on the human body and mind. Such beneficial effects include reduction of certain cancers, lowering blood pressure as well as improving mental acuity. Unfortunately, however, while such noun-protein amino acids are desired, the same tend to not be very sable in food products. In fact, additives like theanine tend to break down in food products into components like glutamic acid and ethylamine. Upon doing so, the desired effect of the non-protein amino acid provided is often not seen.

There is increasing interest to stabilize non-protein amino acids within food products in a manner that does not make such food products less appealing to the consumer. In fact, stabilizing non-protein amino acids with ingredients that also provide a positive benefit to consumers is desired. This invention, therefore, is directed to a food product comprising stabilized non-protein amino acid. The food product of this invention also comprises antioxidants that unexpectedly stabilize the non-protein amino acid within the food product. Moreover, the food product of the present invention has excellent taste and appearance characteristics notwithstanding the presence of elevated levels of non-protein amino acids and antioxidants.

### ADDITIONAL INFORMATION

Efforts have been disclosed for making tea products. In U.S. Published Application No. 2007/0248737, a process for preparing a tea product with theanine is described.

Other efforts have been disclosed for making tea extracts. In WO 2006/037511, a process for extracting theanine from plant material is described.

Still other efforts have been disclosed for making food products with theanine. In U.S. Patent No. 6,462,051, compositions with theanine and for reducing mental fatigue are described.

None of the additional information above describes a food product having non-protein amino acid stabilized with antioxidant as set forth and described in the present invention.

### SUMMARY OF THE INVENTION

In a first aspect, the present invention is directed to a food product comprising:
(a) intrinsic non-protein amino acid, extrinsic non-protein amino acid, or both; and
(b) intrinsic antioxidant, extrinsic antioxidant or both,
the food product comprising from about 125 ppm to about 20,000 ppm non-protein amino acid and at least about 25 ppm antioxidant.

In a second aspect, the present invention is directed to a method for making the food product of the first aspect of this invention.

In a third aspect, the present invention is directed to precursors suitable to be used to make the food product of the first aspect of this invention.

Additional aspects of the present invention will more reality become apparent from the description and examples which follow.

Non-protein amino acid as used herein is meant to mean an amino acid that is in free or combined form, but not in a protein. Food product, as used herein, is meant to mean a food product ready to consume, like, for example, a beverage (such as coffee, hot chocolate, milk-based product, fruit juice, energy drink, or tea beverage), spread, sauce, dip, spoonable dressing, ice cream, pasta-based composition, wheat-based composition, meal supplement or replacement drink, or meal supplement or replacement bar, or a mini-drink.

Stabilized, as used herein, means at least about 20% more non-protein amino acid (and preferably, at least about 30%, and most preferably, at least about 40%) is present in the food product during its shelf-life and after about one (1) month when compared to conventional food products not made according to this invention, whereby such stabilization can be the result of hydrogen bonding between the antioxidant and non-protein amino acids. Intrinsic means found within the food product as opposed to being added to the food product (i.e., extrinsic). Extrinsic is meant to include ingredients not naturally found in the food product but added thereto. Food product precursor, as used herein, is meant to mean a precursor composition suitable to use for making a food product. In a preferred embodiment, the food product precursor is one which may be combined with a hot or cold diluent, like water, to make a tea beverage. Tea beverage, as used herein, is meant to include naturally flavored tea, artificially flavored tea, herbal tea, and especially, tea beverages (including decaffeinated tea beverages) with tea solids isolated and recovered from plants like *Camellia sinesis, Camillia assamica, Yabukita* or the like. Such a tea beverage may optionally be carbonated and may be sweetened with natural and/or artificial sweeteners. Comprising, as used herein, is meant to include consisting essentially of and consisting of.

### DETAILED DESCRIPTION OF THE PREFERRED EMBODIMENTS

The only limitations with respect to the type of non-protein amino acids that may be used in this invention are that the non-protein amino acids can provide a benefit to consumers and be present in a food product. Often, the non-protein amino acid employed in this invention is plant derived (i.e., isolated therefrom). Illustrative, yet not limiting examples of the types of non-protein amino acids that may be used in this invention include gamma-ethylamino-L-glutamic acid (L-theanine), gamma amino butyric acid (GABA), mixtures thereof or the like. While it is often preferred that the non-protein amino acids used in this invention are plant derived, it is within the scope of this invention to produce (chemically and/or biologically) such non-protein amino acids. Therefore, use of combinations of non-protein amino acids, like theanine, isolated from tea plants as well as theanine that is synthesized is within the scope of this invention.

L-theanine is conventionally isolated from tea plants by extracting the same from dry tea leaves. Production of theanine is also known. For example, *Pseudomonas citronellosis* GEA, isolated from natural soil, belongs to the genus *Pseudomonas,* and the species *citronellosis* and is a theanine producing bacteria with activities that transfer γ-glutamyl groups. With the same, theanine may be biologically produced by using glutaminase derived from the bacteria in a mixture of glutamine and ethylamine at an alkaline pH. Other methods for the synthesis of theanine include those that dehydrate glutamic acid to obtain L-pyrrolidone carboxylic acid which may be added to ethylamine to produce crystals of theanine. Such crystals may be purified via re-crystallization with an alcohol solution. The former method of theanine production is described in furopean Application No. EP 1544306 A1 and the latter method is described in "The Journal of Tea Science", 2003 (Vol. 23) (No. 2) 99-104. Another method for making theanine includes the use of glutamic acid derivatives and condensation agents to eventually yield a product which may be stripped of adamantyloxycarbonyl groups and oxy tertiary butyl groups to produce theanine. Such a method is disclosed in more detail in Japanese Application No. 2006/083155 A. In an especially preferred embodiment, the non-protein amino acid used in this invention is theanine, and particularly, theanine isolated from tea leaves.

Typically, the food product made according to this invention comprises from about 125 ppm to about 20,000 ppm non-protein amino acid (e.g., an amount higher than that found in a conventional tea beverage). In a preferred embodiment, the food product of the present invention comprises at least about 175 ppm non-protein amino acid, and most preferably, from about 200 ppm to about 3,750 ppm non-protein amino acid, including all ranges subsumed therein. While it is within the scope of this invention for all of the non-protein amino acid to be intrinsic, typically extrinsic non-protein amino acid is required in order to achieve the desired concentration within the food product of this invention. Often, at least about 25% of the non-protein amino acid employed is extrinsic, and preferably, at least about 65%, and most preferably, at least about 95% of the non-protein amino acid employed in the food product of this invention is extrinsic.

Regarding the antioxidants used in this invention, the only limitations with respect to the same are that they are suitable for use in food products. Topically, the antioxidants used in this invention are plant (including botanicals) and/or fruit derived, and they include vitamin C, polyphenols or mixture thereof. Another antioxidant suitable for use in this invention includes Vitamin E, especially water soluble Vitamin E.

The polyphenols suitable for use in this invention include any of those that may be used in a food product and suitable to be formulated with a non-protein amino acid. Examples of the types of polyphenols suitable for use in this invention include those generally classified as flavonoids. Illustrative and nonlimiting examples of the types of flavonoids suitable for use in this invention include hesperitin, hesperidin, naringenin, epicatechin, epicatechin, gallate, epigallocatechin, epigallocatechin gallate, catechin, gallocatechin, theaflavin, thearubigin, mixtures thereof or the like. Other antioxidants which may be used in this invention include catechol, bearberry, pomegranate and/or rooibos extract. Preferred flavonoids suitable for use in this invention are those which are isolated from citrus fruits (especially from orange juice concentrate), green tea or black tea. The most preferred flavonoids suitable for use in this invention are the catechins isolated from green tea, black tea or a mixture thereof.

Often, the food product of the present invention comprises at least about 25 ppm antioxidants. Preferably, the food product of the present invention comprises antioxidant in an amount from about 0.2 to about 1,500 times the amount of non-protein amino acid. Most preferably, the food product of the present invention comprises from about 200 to about 1100 ppm antioxidant, including all ranges subsumed therein. Often, from about 2% to about 100% of the antioxidant used in the present invention is intrinsic. In the case of food products with tea solids, often at least about 85% by weight of the antioxidant used is intrinsic.

When making the food product of the present invention, antioxidant and non-protein amino acid may be added (typically in liquid, powder or concentrate form) as ingredients (in no particular order) and mixed with additional ingredients to produce the desired food product. The resulting food product should have a pH of greater than about 3, and preferably, greater than about 3.5, and most preferably, from about 4 to about 6.5, including all ranges subsumed herein. In a preferred embodiment, the food product is an energy drink, mini-drink or tea beverage. In a most preferred embodiment, the food product is a tea beverage (e.g., black tea, green tea or a mixture thereof) with from about 0.5 to about 3.5% by weight tea solids, based on total weight of the beverage.

Regarding the precursors suitable to make the food product of this invention, the same are preferably tea leaf, powder mix, or a liquid concentrate. Non-protein amino acid and/or antioxidant may be added to the precursors and if desired (e.g., for leaf and/or powder mix) sprayed thereon.

In the case of tea leaf, such a precursor will typically comprise from about 3 to about 45%, and preferably, from about 4 to about 35%, and most preferably, from about 5 to about 25% by weight non-protein amino acid (intrinsic plus extrinsic) based on total weight of the non-protein amino acid and leaf, and including all ranges subsumed therein. With respect to the powder mix, such a precursor typically comprises from about 3 to about 45%, and preferably, from about 4 to about 40%, and most preferably, from about 7 to about 35% by weight non-protein amino acid (intrinsic plus extrinsic) based on total weight of the non-protein amino acid and powder mix, and including all ranges subsumed therein. The liquid concentrate suitable for use typically comprises from about 4 to about 50%, and preferably, from about 5 to about 40%, and most preferably, from about 7 to about 30% by weight non-protein amino acid, based on total weight of non-protein amino acid and liquid concentrate and including all ranges subsumed therein.

The preferred tea leaf suitable to be combined with non-protein amino acid and antioxidant as described herein is made available by Unilever, branded with the Lipton Tea name. The preferred powder mix suitable for combining with non-protein amino acid and antioxidant as described herein is also available by Unilever under the Lipton Tea name. The preferred liquid concentrates suitable for use herein are described, for example, in U.S. Patent Nos. 6,413,570 and 6,274,187, where the same describe liquid tea concentrates with high levels of tea solids.

It is within the scope of this invention to include optional ingredients in the food products. Such option ingredients include chelator (e.g., EDTA), sequestering agent (e.g., sodium hexametaphosphate), colorant, filler (like a dextrin-based compound), preservative, flavor, vitamin (including riboflavin), niacinamide, Vitamin B12, sweetener, fruit juices, surfactant (like sorbitan monolaurate and sorbitan monopalmitate), antifoam or the like.

Still other optional additives which may be used in this invention include herb and nutrient blends like those that comprise at least one of lonicera, forsythia, schizonepeta, ginger, Chinese vitex, isatis root, echinacea or any combination thereof. Amino acids like glutamine and lysine may also be used, if desired, as well as therapeutic agents like those classified as polyfuranosylpyranosyl-saccharides recovered from North American Ginseng Fractions as described in U.S. Patent No. 6,432,454.

Even other optional additives that may be used include high fructose corn syrup, caffeine, sterol esters, yogurt powder, protein (like milk and whey), dietary fiber (like gum Arabic), ginseng root, guarana, quality stabilizers, acidulants (e.g., citric acid, tartaric acid, and/or phosphoric acid), mixtures thereof or the like. When employed, such optional additives, collectively, make up less than about 55% by weight of the food product. In a preferred embodiment, the food product of the present invention has at least about 70% by weight water, and most preferably, at least about 90% by weight water, based on total weight of the food product.

The packaging for the food product made according to this invention is limited only to the extent that it is acceptable to the everyday consumer. Such packaging can include foil wraps, bottles (like PET, and preferably, glass), cans or standard drink pouches or boxes.

When consumed, the food product of this invention successfully delivers non-protein amino acid and antioxidant to the consumer. Therefore, it is within the scope of this invention for the food product to be sold as a vitality product that provides beneficial health effects and/or improves mental acuity. Additionally, the food product of the present invention has excellent taste and appearance characteristics even with elevated levels of non-protein amino acid and antioxidant.

The examples which follow are provided to facilitate an understanding of the present invention. The examples are not intended to limit the scope of the claims.

### Example 1

Precursor (powder mix) was made by mixing the following ingredients.

| Ingredient | Weight % in Precursor |
|---|---|
| Green tea powder | 12-14%* |
| Black tea powder | 28-32%* |
| Acidulant | 27-30% |
| Sweetener | 2-3% |
| Color | 1-2% |
| Flavor | 17-20% |
| Non-protein amino acid (extrinsic theanine) | 4.5-5.5%* |
| Stabilizer | 0.3-0.4 |

| | |
|---|---|
| * flavonoid calibrated for a combined total of 8-10 wt. % and intrinsic non-protein amino acid (theanine) calibrated for a combined total of 0.6 to 0.7 wt. %. | |

### Example 2

About one (1) liter of water was added to four (4) grams of the precursors prepared in Example 1. The resulting single strength tea beverages contained about 20 to 30 ppm intrinsic theanine, about 180 to 250 ppm extrinsic theanine and about 340 to 400 ppm flavonoids.

### Example 3

About fifty (50) panelists were given samples of tea beverages similar to the beverages prepared in Example 2. The panelists unanimously concluded that the tea beverages had an excellent appearance and that they very much liked the taste of the beverages having the elevated levels of non-protein amino acid.

### Example 4

Beverages were prepared having the following antioxidant to non-protein amino acid weight ratios. The antioxidants were catechin, catechol, epicatechin, epigallocatechin gallate and the non-protein amino acid was theanine.

| Beverage | Antioxidant : Non-protein amino acid | |
|---|---|---|
| Control | No Antioxidant | |
| A | 1 | 2 |
| B | 1 | 0.8 |
| C | 1 | 2 |
| D | 1 | 0.8 |

After storage for about one (1) month at ambient temperature, molecular analysis revealed about 50% of the non-protein amino acid in the control degraded. The beverages made according to this invention (Beverages A-D) after molecular analysis revealed (on average) that less than about 26% of the non-protein amino acid degraded.

## Claims

1. A precursor for making a food product, the food product comprising:
(a) from 125 ppm to 20,000 ppm non-protein amino acid, wherein the non-protein amino acid is intrinsic non-protein amino acid, extrinsic non-protein amino acid, or both, and wherein at least 25% of the non-protein amino acid is extrinsic; and
(b) at least 25 ppm antioxidant, wherein the antioxidant is intrinsic antioxidant, extrinsic antioxidant or both, and wherein the antioxidant is selected from hesperitin, hesperidin, naringenin, epicatechin, epicatechin gallate, epigallocatechin, epigallocatechin gallate, catechin, gallocatechin, theaflavin, thearubigin, or mixtures thereof;
the precursor comprising:
i) tea leaf and from 3 to 45% by weight non-protein amino add;
ii) tea powder mix and from 3 to 45% by weight non-protein amino acid; or
iii) liquid tea concentrate and from 4 to 50% by weight non-protein amino acid.

2. The precursor according to claim 1 wherein the food product comprises at least 175 ppm non-protein amino acid.

3. The precursor according to claim 2 wherein the food product comprises from 200 ppm to 3,750 ppm non-protein amino acid.

4. The precursor according to any one of the preceding claims wherein the food product comprises antioxidant in an amount from 0.2 to 1,500 times the amount of non-protein amino acid.

5. The precursor according to any one of the preceding claims wherein the food product comprises from 200 to 1100 ppm antioxidant

6. The precursor according to any one of the preceding claims wherein the non-protein amino acid is theanine, gamma amino butyric acid or a mixture thereof.

7. The precursor according to claim 6 wherein the non-protein amino acid is theanine.

8. The precursor according to any one of the preceding claims wherein the food product is a beverage, spread, sauce, dip, spoonable dressing, ice cream, pasta-based composition, wheat-based composition, meal supplement or replacement drink, or a meal supplement or replacement bar, or a mini-drink.

9. The precursor according to claim 8 wherein the food product is a tea beverage.

10. The precursor according to claim 9 wherein the food product is a decaffeinated tea beverage.

11. The precursor according to any one of the preceding claims wherein the antioxidant is from green tea, black tea or citrus fruit.

12. The precursor according to any one of the preceding claims wherein the food product has a pH of greater than 3 and the antioxidant stabilizes the non-protein amino acid.

13. The precursor according to any one of the preceding claims wherein the food product further comprises corn syrup, acidulant, sodium hexametaphosphate, caffeine, ginseng root, or a mixture thereof.

## Patentansprüche

1. Vorläufer zur Herstellung eines Nahrungsmittelprodukts, wobei das Nahrungsmittelprodukt umfasst:
(a) 125 ppm bis 20000 ppm Nicht-Protein-Aminosäure, wobei die Nicht-Protein-Aminosäure intrinsische Nicht-Protein-Aminosäure, extrinsische Nicht-Protein-Aminosäure oder beides ist und wobei wenigstens 25 % der Nicht-Protein-Aminosäure extrinsisch sind, und
(b) wenigstens 25 ppm Antioxidans, wobei das Antioxidans intrinsisches Antioxidans, extrinsisches Antioxidans oder beides ist und wobei das Antioxidans aus Hesperitin, Hesperidin, Naringenin, Epicatechin, Epicatechingallat, Epigallocatechin, Epigallocatechingallat, Catechin, Gallocatechin, Theaflavin, Thearubigin und Gemischen davon ausgewählt ist;
wobei der Vorläufer umfasst:
(i) Teeblätter und 3 bis 45 Gewichts-% Nicht-Protein-Aminosäure;
(ii) Teepulvermischung und 3 bis 45 Gewichts-% Nicht-Protein-Aminosäure oder
(iii) flüssiges Teekonzentrat und 4 bis 50 Gewichts-% Nicht-Protein-Aminosäure.

2. Vorläufer gemäß Anspruch 1, wobei das Nahrungsmittelprodukt wenigstens 175 ppm Nicht-Protein-Aminosäure umfasst.

3. Vorläufer gemäß Anspruch 2, wobei das Nahrungsmittelprodukt 200 ppm bis 3750 ppm Nicht-Protein-Aminosäure umfasst.

4. Vorläufer gemäß einem der vorangehenden Ansprüche, wobei das Nahrungsmittelprodukt Antioxidans in einer Menge des 0,2- bis 1500-fachen der Menge an Nicht-Protein-Aminosäure umfasst.

5. Vorläufer gemäß einem der vorangehenden Ansprüche, wobei das Nahrungsmittelprodukt 200 bis 1100 ppm Antioxidans umfasst.

6. Vorläufer gemäß einem der vorangehenden Ansprüche, wobei die Nicht-Protein-Aminosäure Theanin, gamma-Aminobuttersäure oder ein Gemisch davon ist.

7. Vorläufer gemäß Anspruch 6, wobei die Nicht-Protein-Aminosäure Theanin ist.

8. Vorläufer gemäß einem der vorangehenden Ansprüche, wobei das Nahrungsmittelprodukt ein Getränk, ein Aufstrich, eine Soße, ein Dip, ein löffelbares Dressing, Eiscreme, eine Zusammensetzung auf Pasta-Basis, eine Zusammensetzung auf Weizen-Basis, ein Mahlzeit-Ergänzungsmittel oder -Ersatzgetränk oder eine Mahlzeit-Ergänzung oder ein -Ersatzriegel oder ein Minigetränk ist.

9. Vorläufer gemäß Anspruch 8, wobei das Nahrungsmittelprodukt ein Teegetränk ist.

10. Vorläufer gemäß Anspruch 9, wobei das Nahrungsmittelprodukt ein entkoffeiniertes Teegetränk ist.

11. Vorläufer gemäß einem der vorangehenden Ansprüche, wobei das Antioxidans aus grünem Tee, schwarzem Tee oder Zitrusfrüchten stammt.

12. Vorläufer gemäß einem der vorangehenden Ansprüche, wobei das Nahrungsmittelprodukt einen pH von größer als 3 hat und das Antioxidans die Nicht-Protein-Aminosäure stabilisiert.

13. Vorläufer gemäß einem der vorangehenden Ansprüche, wobei das Nahrungsmittelprodukt außerdem Maissirup, Säuerungsmittel, Natriumhexametaphosphat, Koffein, Ginseng-Wurzel oder ein Gemisch davon umfasst.

## Revendications

1. Précurseur servant à préparer un produit alimentaire, ledit produit alimentaire comprenant :
(a) de 125 à 20 000 ppm d'acide aminé non-protéique, dans lequel l'acide aminé non-protéique est un acide aminé non-protéique intrinsèque, un acide aminé non-protéique extrinsèque, ou les deux, et dans lequel au moins 25 % de l'acide aminé non-protéique est extrinsèque ; et
(b) au moins 25 ppm d'antioxydant, dans lequel l'antioxydant est un antioxydant intrinsèque, un antioxydant extrinsèque ou les deux, et dans lequel l'antioxydant est choisi parmi l'hespéritine, l'hespéridine, la naringénine, l'épicatéchine, le gallate d'épicatéchine, l'épigallocatéchine, le gallate d'épigallocatéchine, la catéchine, la gallocatéchine, la théaflavine, la théarubigine, ou leurs mélanges ;
le précurseur comprenant :
i) de la feuille de thé et de 3 à 45 % en poids d'acide aminé non-protéique ;
ii) un mélange de poudres de thé et de 3 à 45 % en poids d'acide aminé non-protéique; ou
iii) un concentré liquide de thé et de 4 à 50 % en poids d'acide aminé non-protéique.

2. Précurseur selon la revendication 1, dans lequel le produit alimentaire comprend au moins 175 ppm d'acide aminé non-protéique.

3. Précurseur selon la revendication 2, dans lequel le produit alimentaire comprend de 200 à 3 750 ppm d'acide aminé non-protéique.

4. Précurseur selon l'une quelconque des revendications précédentes, dans lequel le produit alimentaire comprend un antioxydant en une quantité de 0,2 à 1 500 fois la quantité d'acide aminé non-protéique.

5. Précurseur selon l'une quelconque des revendications précédentes, dans lequel le produit alimentaire comprend de 200 à 1 100 ppm d'antioxydant.

6. Précurseur selon l'une quelconque des revendications précédentes, dans lequel l'acide aminé non-protéique est la théanine, l'acide gammaaminobutyrique ou leur mélange.

7. Précurseur selon la revendication 6, dans lequel l'acide aminé non-protéique est la théanine.

8. Précurseur selon l'une quelconque des revendications précédentes, dans lequel le produit alimentaire est une boisson, une pâte à tartiner, une sauce, une sauce ou mousse pour tremper, un assaisonnement pouvant être prélevé à la cuillère, une glace, une composition à base de pâtes, une composition à base de blé, un complément alimentaire ou une boisson substitutive, ou un complément alimentaire ou une barre substitutive, ou une mini-boisson.

9. Précurseur selon la revendication 8, dans lequel le produit alimentaire est une boisson à base de thé.

10. Précurseur selon la revendication 9, dans lequel le produit alimentaire est une boisson à base de thé décaféiné.

11. Précurseur selon l'une quelconque des revendications précédentes, dans lequel l'antioxydant est issu du thé vert, du thé noir ou d'un agrume.

12. Précurseur selon l'une quelconque des revendications précédentes, dans lequel le produit alimentaire a un pH supérieur à 3 et l'antioxydant stabilise l'acide aminé non-protéique.

13. Précurseur selon l'une quelconque des revendications précédentes, dans lequel le produit alimentaire comprend, en outre, du sirop de maïs, un acidulant, de l'hexamétaphosphate de sodium, de la caféine, de la racine de ginseng, ou un mélange de ceux-ci.
